# EUROPÄISCHE PATENTSCHRIFT

(11) **EP 1 074 428 B1**
(45) Veröffentlichungstag und Bekanntmachung des Hinweises auf die Patenterteilung: **27.05.2009**
(21) Anmeldenummer: 00115044.0
(22) Anmeldetag: 26.07.2000
(51) Int. Cl.: B60N 3/10

(54) **Halterung für Getränkebehälter in einem Kraftfahrzeug**
Support for a beverage container for automotive vehicles
Support pour un récipient de boisson pour véhicules automobiles

(30) Priorität: 05.08.1999 DE 19937030
(43) Veröffentlichungstag der Anmeldung: 07.02.2001
(73) Patentinhaber: Volkswagen Aktiengesellschaft, 38436 Wolfsburg (DE)
(72) Erfinder: Dänekas, Lars, Dipl. Ing., 38106 Braunschweig (DE); Bischoff, Klaus, 38173 Evessen (DE)

(56) Entgegenhaltungen:
- EP-A- 0 663 318
- DE-A- 4 224 701
- DE-U- 29 812 146
- US-A- 4 759 584
- PATENT ABSTRACTS OF JAPAN vol. 1997, no. 01, 31. Januar 1997 (1997-01-31) & JP 08 238985 A (PIOLAX INC;NISSAN MOTOR CO LTD), 17. September 1996 (1996-09-17)

## Beschreibung

Die Erfindung betrifft eine Fahrzeugkonsole mit einer Halterung für Getränkebehälter für ein Kraftfahrzeug nach dem Oberbegriff des Anspruchs 1

Halterungen für Getränkebehälter in Kraftfahrzeugen, wie z. B. für Getränkedosen oder Getränkebecher sind allgemein bekannt. Eine vorbekannte, gattungsgemäße Halterung umfasst eine in einer Fahrzeugkonsole ausgebildete, von oben über eine Stauraumöffnung zugängliche Vertiefung als Stauraum, in die ein Getränkebehälter wenigstens mit einem unteren Getränkebehälterabschnitt einsetzbar ist. Nachteilig bei diesen Vertiefungen ist, dass diese in der Nichtgebrauchsstellung der Halterung ständig nach oben offen sind und dadurch wenig ansehnlich sind und insbesondere leicht verschmutzen können

Eine völlig andere Art der Halterung von Getränkebehältern ist aus der DE 298 12 146 U1 bekannt. Dort ist eine Halterung für Getränkebehälter beschrieben, die kompliziert und aufwendig aufgebaut ist und sich von der gattungsmäßigen Halterung insbesondere dadurch unterscheidet, dass hier der Stauraum für den Getränkebehälter nicht durch eine konsolenseitige Vertiefung gebildet wird, sondern durch eine relativ zu einer Mittelkonsole sowie zu einem Stauraumboden nach oben ausfahrbare Zylinderschale. Zur Entriegelung der Zylinderschale wird dabei der Stauraumboden beim Aufsetzen des Getränkebehälters nach unten gedrückt. In der Nichtgebrauchsstellung der Halterung ist die Zylinderschale in die Mittelkonsole eingefahren und schließt mit ihrer Oberkante sowie mit dem Stauraumboden flächenbündig mit der Mittelkonsole ab. Aufgrund ihres aufwendigen und komplizierten Aufbaus ist diese Halterung somit sehr kostspielig.

Eine weitere, im Gegensatz zur gattungsgemäßen Halterung für Getränkebehälter ebenfalls andere Art der Halterung von Getränkebehältern ist aus der JP 08238985 bekannt, bei der eine äußere Ringschale zur Ausbildung eines ausreichend großen Stauraums für Getränkebehälter relativ zu einer als Halterung dienenden Innenschale in eine Fahrzeugkonsole absenkbar ist. Auch hier handelt es sich um einen komplizierten aufwendigen und somit kostspieligen Aufbau zur Halterung von Getränkebehältern.

Aus der US 4,759,584 A ist eine gattungsgemäße Fahrzeugkonsole mit einer Getränkebehälter-Halterung bekannt, die eine Abdeckplatte aufweist, die zwischen einer Nichtgebrauchsstellung, in der eine Stauraumöffnung verschlossen ist, und einer abgesenkten Gebrauchsstellung verschiebbar ist: An der Unterseite der Abdeckplatte ist eine Zahnstange angeformt, die vertikal nach unten über einen Gehäuseeinsatz-Boden hinaus ragt. Die Zahnstange ist unterhalb des Gehäuseeinsatz-Bodens mit einer quer verlaufenden Sperrklinke in Eingriff, die mittels einer Ver- und Entriegelungstaste betätigbar ist. Die Ver- und Entriegetungstaste ist beabstandet vom Stauraum angeordnet und ausgehend von der oberen Sichtseite der umgebenden Mittelkonsole betätigbar. Aus der DE 4 224 701 A1 ist eine weitere Haltevorrichtung für Getränkebehälter bekannt, die einen Träger zur Aufnahme eines Getränkebehälter-Bodens und einen die Seitenwand des Getränkebehälters ringförmig umfassenden Halter aufweist. Sowohl der Träger als auch der Halter sind ausklappbar an einer Befestigurigskonsole angelenkt. Aus der EP 0 663 318 A1 ist ein Halter für Trinkbehälter bekannt, der eine Haltelippe aufweist, die sich umfangsseitig um die Seitenwand des Trinkbehälters erstrecken kann.

Aufgabe der Erfindung ist es daher, eine Halterung für Getränkebehälter in einem Kraftfahrzeug zur Verfügung zu stellen, die mit einfachen Mitteln schnell und kostengünstig herzustellen ist und zudem in der Nichtgebrauchsstellüng der Halterung optisch ansehnlich und wenig anfällig gegen Verschmutzen ist.

Diese Aufgabe wird mit den Merkmalen des Anspruchs 1 gelöst.

Gemäß Anspruch 1 ist die Stauraumöffnug in einer Nichtgebrauchsstellung der Halterung mittels einer Abdeckplatte verschließbar und ist die Abdeckplatte in einer Gebrauchsstellung der Halterung in den Stauraum absenkbar, wobei sie eine Aufstandsfläche für den Getränkebehälter bildet.

Damit wird erreicht, dass in der Nichtgebrauchsstellung der Halterung keine wenig ansehnliche Vertiefung in der Fahrzeugkonsole mehr ausgebildet ist, wobei dadurch gleichzeitig auch der Stauraum vor dem unerwünschten Eindringen von Schmutzpartikeln geschützt ist. Dabei kann die Abdeckung an eine Innenraumausstattung angepasst werden, so dass sie sich harmonisch in das Gesamtgefüge der Innenraumausstattung einfügt. Insbesondere lässt sich eine derartige Halterung für Getränkebehälter auch einfach in 3D-Oberflächen integrieren.

Zur Freigabe des Stauraums zur Getränkebehälterhalterung braucht hier lediglich die Abdeckplatte auf einfache Weise in den Stauraum abgesenkt werden. Zusätzlich dazu fungiert die Abdeckplatte in der Gebrauchsstellung der Halterung in einer Doppelfunktion als Aufstandsfläche für den Getränkebehälter. Eine Halterung des Getränkebehälters ist somit auf einfache und schnelle Weise ohne viele Bauteile möglich. Beispielsweise braucht hierzu ein Getränkebehälter mit seinem Getränkebehälterboden lediglich auf die Abdeckplate in der Nichtgebrauchsstellung der Halterung aufgesetzt werden, die anschließend nach unten in Richtung Stauraum abgesenkt wird.

Ein weiterer Vorteil ist dadurch gegeben, dass zur Ausbildung eines Stauraums lediglich eine einfach herzustellende Vertiefung in der Fahrzeugkonsole vorzusehen ist, wobei insbesondere über die Baugröße des Stauraums in dessen Längserstreckungsrichtüng bestimmt werden kann, mit welcher Tiefe ein Getränkebehälter für eine stabile und sichere Halterung in den Stauraum einsetzbar ist. Dadurch, dass der Stauraum hier vollständig in der Fahrzeugkonsole versenkt ist, sind ferner keine als insbesondere den optischen Eindruck störende, im Bereich oberhalb der Fahrzeugkonsole aufbauenden Bauteile in der Gebrauchsstellung der Halterung vorhanden
Unter dem Begriff Fahrzeugkonsole sind hier sämtliche fahrzeugseitigen Innenaufbauten zu verstehen, in die eine solche Halterung integriert werden kann, wie z. B. eine Mittelkonsole, eine Armlehne etc.

Grundsätzlich kann die Abdeckplatte sowohl in Richtung Stauraumöffnung als auch in Richtung Stauraumboden vorgespannt sein. In einer bevorzugten Ausführungsform ist die Abdeckplatte jedoch in Richtung Stauraumöffnung vorgespannt. Die Vorspannung erfolgt vorzugsweise mittels wenigstens einer Rollfeder und/oder Spiralfeder. Alternativ dazu kann die Abdeckplatte jedoch auch mittels eines an sich bekannten Spindelantriebs oder über Kniehebel, die wahlweise gedämpft ausgeführt werden, verfahren werden, wobei hierfür dann entsprechende Freiräume im unteren Stauraumbereich erforderlich sind.

Für einen hochwertigen optischen Gesamteindruck schließt die Abdeckplatte in der Nichtgebrauchsstellung der Halterung im Bereich der Stauraumöffnung vorzugsweise flächenbündig mit der Oberfläche der Fahrzeugkonsole ab. Insbesondere ist dies in Verbindung mit einer Mittelkonsole als Fahrzeugkonsole vorteilhaft. Dazu kann die Oberseite der Abdeckfläche sowie die sie umgebende Fahrzeugkonsole jeweils mit einem gleichen Materialüberzug, z. B. einer Echtholzverkleidung, versehen werden, so dass sich für den Betrachter der Eindruck einer im wesentlichen durchgehenden Oberfläche ergibt.

Für eine bessere Halterung des eingesetzten Getränkebehälters ist die Abdeckplatte auf ihrer Oberseite mit Noppen als Rutschsicherung versehen. Diese Noppen sind beispielsweise Gumminoppen, die für eine optisch ansprechende Gestaltung in einer regelmäßigen geometrischen Struktur angeordnet sein können. Die Noppen können dabei z. B. so angeordnet sein, dass sie sich harmonisch als ein ggf. wiederkehrendes Gestaltungselement des Innenraumdesigns einfügen.

Ferner ist im Stauraumöffnungsrandbereich in einer weiteren bevorzugten Ausführungsform ein Anschlag für die Abdeckplatte in der Nichtgebrauchsstellung der Halterung ausgebildet. Vorzugsweise ist dieser Anschlag kreisringförmig ausgebildet und steht in Form einer Lippe im stauraumöffnungsnahen Randbereich in den Stauraum vor. Bei in der Nichtgebrauchsstellung der Halterung an dem Anschlag anliegender Abdeckplatte wird durch diese gleichzeitig auch die Fuge zwischen dem Stauraumrandbereich und dem Abdeckplattenrand kaschiert. Insbesondere können dadurch auf einfache Weise evtl. toleranzbedingte Ungleichheiten in den Fugenabmessungen ausgeglichen werden, was wiederum zu einem optisch hochwertigen Gesamteindruck führt.

Erfindungsgemäß ist die Abdeckplatte in der Gebrauchsstellung der Halterung im Stauraumbodenbereich sowie in Zwischenpositionen zwischen dem Stauraumöffnungsrandbereich und dem Stauraumbodenbereich lösbar festlegbar. Die lösbare Festlegung wird durch eine an sich bekannte Verriegelung erreicht. In Verbindung mit einer Vorspannung in Richtung Stauraumöffnung erfolgt die lösbare Verriegelung dabei vorzugsweise im Bereich des Stauraumbodens, während bei einer Vorspannung in Richtung Stauraumboden die Verriegelung vorzugsweise im Bereich der Stauraumöffnung erfolgt. Die Verriegelung ist im Randbereich innerhalb des Stauraums integriert. Eine Positionierung innerhalb des Stauraumes hat den Vorteil, dass kein unbeabsichtigtes Entriegeln bei leerem Becher stattfinden kann, da der Becher zum Entriegeln entnommen werden muss.

Weiter bevorzugt ist ein in der Gebrauchsstellung der Halterung in den Stauraum eingesetzter Getränkebehälter mittels wenigstens einer Klemmbacke lagefest im Stauraum haltbar. Damit ist insbesondere auch bei langgestreckten Getränkebehältern, wie z.B. 0,5 I-Dosen, die mit einem oberen Getränkebehälterabschnitt aus der Fahrzeugkonsole ragen, eine stabile und sichere Festlegung des Getränkebehälters im Stauraum möglich, ohne daß es dazu einer besonders tief ausgebildeten Vertiefung als Stauraum bedarf. Ferner können mit derartigen Klemmbacken auch Getränkebehälter mit unterschiedlichen Durchmessern unabhängig von.der Stauraumgeometrie, wie z. B. dem Stauraumdurchmesser bei zylinderförmigen Stauräumen, auf einfache Weise gut gehalten werden. Für eine besonders gute Haltefunktion sind dabei in einer bevorzugten Ausführungsform drei Klemmbacken über den Stauraumumfang verteilt, im Falle eines zylindrischen Stauraums vorzugsweise um jeweils 120° zueinander versetzt.

Vorteilhaft ist die wenigstens eine Klemmbacke L-förmig ausgebildet und ragt , wenigstens mit einem durch die aneinandergrenzenden L-Schenkel gebildeten Eckbereich dreiecksförmig in den Stauraum. Dabei werden durch die L-Schenkelabschnitte des Eckbereichs jeweils Auflaufschrägen für einen Abdeckplattenrandbereich ausgebildet.

Der wenigstens eine Klemmschenkel ist in Richtung Stauraum vorgespannt, z. B. federvorgespannt, so daß der wenigstens eine Klemmschenkel nach dem Überdrücken beim Einsetzen eines Getränkebehälters diesen für eine stabile und sichere Halterung in dem Stauraum verklemmt. Vorzugsweise ist die wenigstens eine Klemmbacke dabei schwenkbar im Bereich außerhalb des Stauraums angelenkt.

In einer weiteren bevorzugten Ausführungsform ist der Stauraum durch einen in die Fahrzeugkonsole einsetzbaren Gehäuseeinsatz begrenzt und gebildet. Dieser Gehäuseeinsatz ist beispielsweise ein als Ziehteil ausgebildeter Edelstahleinsatz. Damit lassen sich einen optisch hochwertigen Gesamteindruck vermittelnde Halterungen ausbilden, die zudem harmonisch in eine Innenraumgestaltung integrierbar sind. Die bereits erwähnte lösbare Verriegelung der Abdeckplatte kann auch im Sichtbereich des Gehäuseeinsatzes integriert sein.

Anhand einer Zeichnung wird die Erfindung näher erläutert.

Die einzige Figur zeigt schematisch eine Halterung 1 für Getränkebehälter 2, die in einer Mittelkonsole 3 eines Kraftfahrzeugs ausgebildet ist.

Diese Halterung 1 umfaßt eine in der Mittelkonsole 3 ausgebildete und von oben über eine Stauraumöffnung 4 zugängliche Vertiefung als Stauraum 5. Der Stauraum 5 ist hier durch einen in die Mittelkonsole 3 einsetzbaren Gehäuseeinsatz 16, der z. B. aus Edelstahl hergestellt ist, begrenzt.

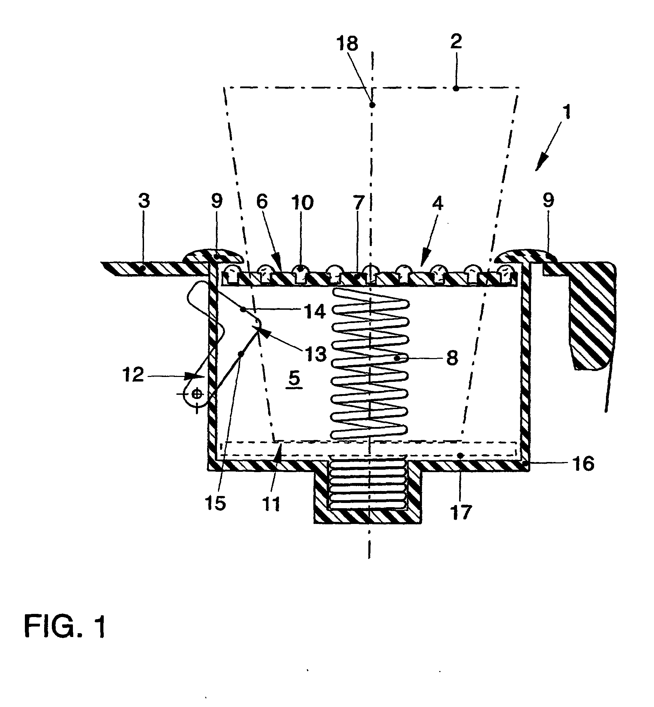

In diesen Stauraum 5 ist der Getränkebehälter 2, der in der Darstellung der Fig. 1 lediglich beispielhaft und schematisch strichpunktiert eingezeichnet ist, mit einem unteren Getränkebehälterabschnitt einsetzbar.

In der in der Fig. 1 mit durchgezogenen Linien dargestellten Nichtgebrauchsstellung 6 der Halterung 1 ist die Stauraumöffnung 4 des Stauraums 5 mittels einer Abdeckplatte 7 verschlossen.

Die Abdeckplatte 7 ist in Richtung Stauraumöffnung 4 mittels einer hier lediglich schematisch eingezeichneten Spiralfeder 8 federvorgespannt und liegt mit ihrem Randbereich an einem als Lippe ausgebildeten Anschlag 9 im Stauraumöffnungsrandbereich an. Durch diese Lippe 9, die beispielsweise einstückig und umlaufend im Bereich der Stauraumöffnung 4 ausgebildet ist, werden die Abstandsfugen zwischen den Stauraumwänden und der Abdeckplatte 7 kaschiert.

Wie dies aus der einzigen Figur weiter ersichtlich ist, weist die Abdeckplatte 7 auf ihrer Oberseite Noppen 10, z. B. Gumminoppen, als Rutschsicherung für den Getränkebehälter 2 auf. Diese Noppen 10 sind vorzugsweise mit einer regelmäßigen geometrischen Struktur auf der Abdeckplattenoberseite angeordnet.

Für den Übergang von der Nichtgebrauchsstellung 6 der Halterung 1 in deren Gebrauchsstellung 11 ist die Abdeckplatte 7 entlang der Stauraumachse 18 axial in den Stauraum 5 bis auf den Stauraumboden absenkbar, wie dies in der Fig. 1 strichliert eingezeichnet ist. Die Abdeckplatte 7 bildet in dieser axial abgesenkten Position eine Aufstandsfläche 17 für den Getränkebehälter 2 aus. In dieser Position ist die Abdeckplatte 7 mittels einer hier nicht dargestellten Ent- und Verriegelungstaste lösbar verrastbar.

In der Gebrauchsstellung 11 der Halterung 1 ist, wie dies in der Fig. 1 lediglich schematisch dargestellt ist, der Getränkebehälter 2 durch Klemmbacken 12 lagegenau im Stauraum 5 gehalten. Die hier lediglich beispielhaft dargestellte Klemmbacke 12 ist L-förmig ausgebildet und ragt mit einem durch die angrenzenden L-Schenkel gebildeten Eckbereich 13 z. B. durch entsprechend in der Stauraumwand ausgebildete Öffnungsschlitze dreiecksförmig in den Stauraum 5, so daß durch die L-Schenkelabschnitte des Eckbereichs 13 jeweils Auflaufschrägen 14, 15 für einen Abdeckplattenrandbereich ausgebildet sind. Die Klemmbacke 12 ist hier in Richtung Stauraum 5 vorgespannt, z. B. mittels einer Rollfeder, was hier allerdings nicht dargestellt ist.

Die Funktion der Halterung 1 wird nachfolgend ebenfalls anhand der Fig. 1 näher erläutert:

In der Nichtgebrauchsstellung 6 der Halterung 1 wird die Abdeckplatte 7 im stauraumöffnungsnahen Randbereich durch die Spiralfeder 8 gegen den Anschlag 9 gedrückt und schließt flächenbündig mit der umgebenden Mittelkonsole 3 ab. Zum Halten eines Getränkebehälters 2 in der Halterung 1, wird dieser mit einem Getränkebehälterboden auf die Abdeckplatte 7 aufgesetzt und diese anschließend über den aufgesetzten Getränkebehälter 2 entgegen der Federkraft der Spiralfeder 8 in Richtung Stauraumboden gedrückt. Dabei gleitet die Abdeckplatte 7 mit ihrem Randbereich entlang der Auflaufschräge 14 der Klemmbacke 12 und drückt diese mit ihrem Eckbereich 13 wenigstens teilweise aus dem Stauraum 5 heraus. Anschließend wird die Abdeckplatte 7 durch den Getränkebehälter 2 bis auf den Stauraumboden gedrückt, wo eine selbsttätig lösbare Verrastung der Abdeckplatte 7 erfolgt. Nach dem Überdrücken des Eckbereichs 13 der Klemmbacke 12 wird dieser aufgrund der Federvorspannung wieder in den Stauraum 5 gedrückt, so daß der Eckbereich 13 während der axialen Abwärtsbewegung der Abdeckplatte 7 mitsamt dem Getränkebehälter 2 entlang der Getränkebehälterseitenwand gleitet und diesen bei gestoppter Abwärtsbewegung in einem bestimmten Behälterbereich verklemmt. Vorzugsweise sind hier drei Klemmbacken über den Umfang des Stauraums verteilt angeordnet.

Soll die Halterung 1 wieder in ihre Nichtgebrauchsstellung 6 überführt werden, wird die hier nicht dargestellte Entriegelungstaste gedrückt, so daß ein Rastelement die Abdeckplatte 7 wieder freigibt, die durch die Spiralfeder 8 nach oben in Richtung zur Stauraumöffnung 4 verschiebt, bis diese an dem Anschlag 9 anliegt. Dabei gleitet der Randbereich der Abdeckplatte 7 über die Auflaufschräge 15 über den Eckbereich 13 der Klemmbacke 12 hinweg und überdrückt diese, so daß die Halterung 1 die in der Fig. 1 mit durchgezogenen Linien dargestellte Position einnimmt.

### BEZUGSZEICHENLISTE

- 1: Halterung
- 2: Getränkebehälter
- 3: Mittelkonsole
- 4: Stauraumöffnung
- 5: Stauraum
- 6: Nichtgebrauchsstellung
- 7: Abdeckplatte
- 8: Spiralfeder
- 9: Anschlag
- 10: Noppen
- 11: Gebrauchsstellung
- 12: Klemmbacke
- 13: Eckbereich
- 14: Auflaufschräge
- 15: Auflaufschräge
- 16: Gehäuseeinsatz
- 17: Aufstandsfläche
- 18: Stauraumachse

## Patentansprüche

1. Fahrzeugkonsole mit einer Halterung für Getränkebehälter für ein Kraftfahrzeug,
mit einer in der Fahrzeugkonsole ausgebildeten, von oben über eine Stauraumöffnung zugänglichen Vertiefung als Stauraum (5); in die ein Getränkebehälter wenigstens mit einem unteren Getränkebehälterabschnitt einsetzbar ist, wobei
die Stauraumöffnung (4) in einer Nichtgebrauchsstellung (6) der Halterung (1) mittels einer Abdeckplatte (7) verschließbar ist,
die Abdeckplatte (7) in einer Gebrauchsstellung (11) der Halterung (1) in den Stauraum (5) absenkbar ist und eine Aufstandsfläche (17) für den Getränkebehälter (2) bildet,
die Abdeckplatte (7) in der Gebrauchsstellung (11) der Halterung (1) im Stauraumbodenbereich und/oder in Zwischenpositionen zwischen dem Stauraumöffnungsrandbereich und dem Stauraumbodenbereich lösbar festlegbar ist, und wobei die lösbarre Festlegung durch eine Verriegelung erreicht und,
**dadurch gekennzeichnet, dass** die Verriegelung im Randbereich innerhalb des Stauraums integriert ist, so dass kein unbeabsichtigtes Entriegln bei leerem Becher stattfinden kann, da der Becher zum Entriegeln entnommen werden muß.

2. Halterung nach Anspruch 1, **dadurch gekennzeichnet, daß** die Abdeckplatte (7) in Richtung Stauraumöffnung (4) vorgespannt, vorzugsweise mittels wenigstens einer Rollfeder und/oder Spiralfeder (8) federvorgespannt ist.

3. Halterung nach Anspruch 1 oder Anspruch 2, **dadurch gekennzeichnet, daß** die Abdeckplatte (7) in der Nichtgebrauchsstellung (6) der Halterung (1) im Bereich der Stauraumöffnung (4) flächenbündig mit der Fahrzeugkonsole (3), vorzugsweise einer Mittelkonsole, abschließt.

4. Halterung nach einem der Ansprüche 1 bis 3, **dadurch gekennzeichnet, daß** die Abdeckplatte (7) auf ihrer Oberseite Noppen (10), vorzugsweise Gumminoppen, als Rutschsicherung, in vorzugsweise regelmäßiger geometrischer Anordnung aufweist.

5. Halterung nach einem der Ansprüche 1 bis 4, **dadurch gekennzeichnet, daß** im Stauraumöffnungsrandbereich ein Anschlag (9) für die Abdeckplatte (7) in der Nichtgebrauchsstellung (6) der Halterung (1) ausgebildet ist, vorzugsweise in Form einer Lippe zur gleichzeitigen Fugenkaschierung

6. Halterung nach einem der Ansprüche 1 bis 5, **dadurch gekennzeichnet, daß** ein in der Gebrauchsstelllung (6) der Halterung (1) in den Stauraum (5) eingesetzter Getränkebehälter (2) mittels wenigstens einer Klemmbacke (12), vorzugsweise mittels drei über den Stauraumumfang verteilter Klemmbacken (12), lagefest im Stauraum haltbar ist.

7. Halterung nach Anspruch 6, **dadurch gekennzeichnet, daß** die wenigstens eine Klemmbacke (12) L-förmig ausgebildet ist und wenigstens mit einem durch die aneinandergrenzenden L-Schenkel gebildeten Eckbereich (13) dreiecksförmig in den Stauraum (5) ragt dergestalt, daß durch die L-Schenkelabschnitte des Eckbereichs (13) jeweils Auflaufschrägen (14, 15) für einen Abdeckplattenrandbereich ausgebildet sind, und daß die wenigstens eine Klemmbacke (12) in Richtung Stauraum (5) vorgespannt, vorzugsweise federvorgespannt ist, so daß die wenigstens eine Klemmbacke (12) nach deren Überdrücken beim Einsetzen eines Getränkebehälters (2) diesen verklemmt.

8. Halterung nach Anspruch 7, **dadurch gekennzeichnet, daß** die wenigstens eine Klemmbacke (12) schwenkbar im Bereich außerhalb des Stauraums (5) angelenkt ist.

9. Halterung nach einem der Ansprüche 1 bis 8, **dadurch gekennzeichnet, daß** der Stauraum (5) durch einen in die Fahrzeugkonsole (3) einsetzbaren Gehäuseeinsatz (16), vorzugsweise aus Edelstahl, begrenzt und gebildet ist.

## Claims

1. Vehicle console with a holder for beverage containers for a motor vehicle,
with a depression, which is formed in the vehicle console and is accessible from above via a storage compartment opening, as a storage compartment (5) into which a beverage container can be inserted at least by means of a lower beverage container section, wherein the storage compartment opening (4) can be closed by means of a covering plate (7) in a not-in-use position (6) of the holder (1),
the covering plate (7) can be lowered in a use position (11) of the holder (1) into the storage compartment (5) and forms a standing surface (17) for the beverage container (Z),
the covering plate (7) can be fastened releasably in the use position (11) of the holder (1) in the storage compartment base region and/or in intermediate positions between the storage compartment opening edge region and the storage compartment base region, and wherein the releasable fixing can be achieved by means of a lock, **characterized in that** the lock is integrated in the edge region within the storage compartment, and therefore unintentional unlocking when the cup is empty does not take place, since the cup has to be removed for unlocking to take place.

2. Holder according to Claim 1, **characterized in that** the covering plate (7) is prestressed in the direction of the storage compartment opening (4), and is preferably spring prestressed by means of at least one scroll spring and/or spiral spring (8).

3. Holder according to Claim 1 or Claim 2, **characterized in that**, in the not-in-use position (6) of the holder (1), the covering plate (7) ends flush in the region of the storage compartment opening (4) with the vehicle console (3), preferably a central console.

4. Holder according to one of Claims 1 to 3, **characterized in that** the upper side of the covering plate (7) has studs (10), preferably rubber studs, as means of protecting against slipping, in a preferably regular geometrical arrangement.

5. Holder according to one of Claims 1 to 4, **characterized in that**, in the not-in-use position (6) of the holder (1), a stop (9) is formed in the storage compartment opening edge region for the covering plate (7), preferably in the form of a lip for covering gaps at the same time.

6. Holder according to one of Claims 1 to 5, **characterized in that** a beverage container (2) which is inserted into the storage compartment (5) in the use position (6) of the holder (1) can be held in a positionally fixed manner in the storage compartment by means of at least one clamping jaw (12), preferably by means of three clamping jaws (12) distributed over the circumference of the storage compartment.

7. Holder according to Claim 6, **characterized in that** the at least one clamping jaw (12) is of L-shaped design and projects with at least one corner region (13), which is formed by the mutually adjacent L limbs, into the storage compartment (5) in a triangular manner such that run-on slopes (14, 15) for a covering plate edge region are formed in each case by the L limb sections of the corner region (13), and **in that** the at least one clamping jaw (12) is prestressed, preferably spring prestressed, in the direction of the storage compartment (5) such that the at least one clamping jaw (12) clamps a beverage container (2) after being pressed thereover when the latter is inserted.

8. Holder according to Claim 7, **characterized in that** the at least one clamping jaw (12) is articulated pivotably in the region outside the storage compartment (5).

9. Holder according to one of Claims 1 to 8, **characterized in that** the storage compartment (5) is delimited and formed by a housing insert (16) which can be inserted into the vehicle console (3) and is preferably made of stainless steel.

## Revendications

1. Console de véhicule avec un support pour un récipient de boisson pour un véhicule automobile, avec un creux servant d'espace de rangement (5) formé dans la console de véhicule et accessible par le haut via une ouverture de l'espace de rangement, et dans lequel un récipient de boisson peut être introduit au moins avec une partie inférieure du récipient de boisson, dans laquelle l'ouverture (4) de l'espace de rangement peut être fermée au moyen d'une plaque de masquage (7) lorsque le support (1) n'est pas en position d'utilisation (6), la plaque de masquage (7) peut être abaissée dans l'espace de rangement (5) lorsque le support (1) est en position d'utilisation (11) et forme une surface de dépôt (17) pour le récipient de boisson (2), la plaque de masquage (7) peut être fixée de manière amovible dans la région du fond de l'espace de rangement et/ou dans des positions intermédiaires entre la région du bord de l'ouverture de l'espace de rangement et la région du fond de l'espace de rangement lorsque le support (1) est en position d'utilisation (11), et dans laquelle la fixation amovible est obtenue au moyen d'un verrouillage, **caractérisée en ce que** le verrouillage est intégré dans la région du bord à l'intérieur de l'espace de rangement, de telle manière qu'il ne puisse pas se produire un déverrouillage intempestif lorsque le gobelet est vide, par ce que le gobelet doit être enlevé pour le déverrouillage.

2. Support selon la revendication 1, **caractérisé en ce que** la plaque de masquage (7) est précontrainte en direction de l'ouverture (4) de l'espace de rangement, de préférence précontrainte à ressort au moyen d'au moins un ressort à col de cygne et/ou un ressort spiral (8).

3. Support selon la revendication 1 ou la revendication 2, **caractérisé en ce que** la plaque de masquage (7) obture au ras de la console de véhicule (3), de préférence une console centrale, dans la région de l'ouverture (4) de l'espace de rangement lorsque le support (1) n'est pas en position d'utilisation (6).

4. Support selon l'une quelconque des revendications 1 à 3, **caractérisé en ce que** la plaque de masquage (7) présente sur sa face supérieure des plots (10), de préférence des plots de caoutchouc, pour empêcher le glissement, de préférence en une disposition géométrique régulière.

5. Support selon l'une quelconque des revendications 1 à 4, **caractérisé en ce qu'**une butée (9) pour la plaque de masquage (7) est formée dans la région du bord de l'ouverture de l'espace de rangement, lorsque le support (1) n'est pas en position d'utilisation (6), de préférence sous la forme d'une lèvre servant en même temps à habiller le joint.

6. Support selon l'une quelconque des revendications 1 à 5, **caractérisé en ce qu'**un récipient de boisson (2) introduit dans l'espace de rangement (5) dans la position d'utilisation (6) du support (1) peut être maintenu fixement dans l'espace de rangement au moyen d'au moins une mâchoire de serrage (12), de préférence au moyen de trois mâchoires de serrage (12) réparties sur la périphérie de l'espace de rangement.

7. Support selon la revendication 6, **caractérisé en ce que** l'au moins une mâchoire de rangement (12) est réalisée en forme de L et pénètre sous forme triangulaire dans l'espace de rangement (5) au moins avec une région d'angle (13) formée par les branches jointives du L, de telle manière que les parties des branches du L de la région d'angle (13) forment chaque fois des rampes de contact (14, 15) pour une région de bord de la plaque de masquage, et **en ce que** l'au moins une mâchoire de serrage (12) est précontrainte en direction de l'espace de rangement (5), de préférence est précontrainte à ressort, de telle manière que l'au moins une mâchoire de serrage (12) bloque le récipient de boisson (2) après avoir été repoussée lors de l'introduction de celui-ci.

8. Support selon la revendication 7, **caractérisé en ce que** l'au moins une mâchoire de serrage (12) est montée de façon pivotante dans la région située à l'extérieur de l'espace de rangement (5).

9. Support selon l'une quelconque des revendications 1 à 8, **caractérisé en ce que** l'espace de rangement (5) est limité et formé par un boîtier encastré (16), de préférence en acier allié, à insérer dans la console de véhicule (3).
